Europäisches Patentamt

European Patent Office

Office européen des brevets

(11) Numéro de publication: **0 366 568**
**A1**

(12) **DEMANDE DE BREVET EUROPEEN**

(21) Numéro de dépôt: 89420354.6

(22) Date de dépôt: 20.09.89

(51) Int. Cl.⁵: **B23K 15/00**

(30) Priorité: 23.09.88 FR 8813136

(43) Date de publication de la demande:
02.05.90 Bulletin 90/18

(84) Etats contractants désignés:
BE CH DE FR LI

(71) Demandeur: **Sommeria-Klein, née Ganz, Eva**
**52, impasse du Crêt Ru**
**F-74370 Metz Tessy(FR)**

Demandeur: **Sommeria-Klein, Gilles**
**29 Linkway**
**Crowthorne RG11 6ES(GB)**

Demandeur: **Sommeria-Klein, Denis**
**159, Clos des Tamaris**
**F-34340 Marseillan(FR)**

Demandeur: **Sommeria-Klein, Joel**
**54, rue Emile Gueymard**
**F-38000 Grenoble(FR)**

Demandeur: **Sommeria-Klein, Laure**
**52, impasse du Crêt Ru**
**F-74370 Metz Tessy(FR)**

(72) Inventeur: **Sommeria-Klei, Jean**
-
**Décédé(FR)**

(74) Mandataire: **de Beaumont, Michel**
**Cabinet Poncet 7, chemin de Tillier B.P. 317**
**F-74008 Annecy Cédex(FR)**

(54) **Procédé et dispositif pour le contrôle et la commande automatiques du soudage de bandes en continu.**

(57) Le dipositif selon l'invention permet le soudage en continu d'une première bande (1) et d'une seconde bande (2) selon un joint de contact (4), par bombardement d'électrons selon une zone d'impact (6) dans une enceinte à vide (3). En sortie d'enceinte à vide (3), le cordon de soudure (10) réalisé est observé par une caméra vidéo (9) fixe. La bande (1) est guidée par un galet (15) à axe fixe. L'image du cordon de soudure est comparée à un réticule électronique (24) donnant la position (40) du joint de contact dans une zone de détection (11). Un analyseur d'image détecte l'écart et agit par un amplificateur (21) sur la position transversale de la zone d'impact (6) du faisceau d'électrons, de manière à supprimer l'écart.

FIG.3

## PROCEDE ET DISPOSITIF POUR LE CONTROLE ET LA COMMANDE AUTOMATIQUES DU SOUDAGE DE BANDES EN CONTINU

La présente invention concerne les installations de soudage sous vide par faisceau d'électrons pour des produits de grande longueur, par exemple sous forme de bande continue.

L'utilisation de bandes métalliques composites, c'est-à-dire constituées de deux ou plusieurs bandes de natures différentes soudées côte à côte, se développe rapidement. Ces bandes composites sont des produits semi-finis destinés à être découpés en petits éléments en grande série.

La technique de soudage la plus utilisée est le faisceau d'électrons sous vide. Cette technique est utilisée par exemple dans le dispositif décrit dans le document FR-A-2 360 373.

Ces produits semi-finis sont en général destinés à des technologies de pointe telles que les composants électroniques, et doivent être d'une qualité parfaite, notamment pour la soudure.

L'une des conditions pour la qualité de la soudure réside dans la précision de position de la source de soudage, en l'occurrence le faisceau d'électrons.

Jusqu'à présent, les techniques de soudage telles que celle décrite dans le document FR-A-2 360 373 supposent arbitrairement que la source est fixe en position, et utilisent des moyens de contrôle a posteriori détectant les défauts de soudure et rebutant les portions défectueuses. Les moyens de contrôle mettent en oeuvre généralement les ultrasons ou les courants de Foucault.

Ces techniques traditionnelles conduisent à des pertes de matière non négligeables, car les zones à soudure défectueuse sont totalement inutilisables. Elles conduisent d'autre part à des qualités de soudure qui, bien qu'acceptables car satisfaisant aux normes de contrôle, ne sont pas de qualité optimale. Egalement, les techniques connues nécessitent l'intervention d'un opérateur pour corriger les défauts éventuels de réglage du dispositif de soudage, défauts qui sont la cause des défauts de soudure détectés par les moyens de contrôle.

Dans les techniques de soudage de tubes en continu, par exemple dans le document US-A-3 585 351, on a tenté d'améliorer la soudure des bords de la feuille recourbée formant le tube en utilisant le procédé suivant : un poste de présoudage assure le maintien et le chauffage par induction des bords de matière à souder ; dans un deuxième poste, situé en aval du poste de présoudage, un faisceau d'électrons est dirigé sur la zone des bords de matière à souder, pour parfaire la soudure ; un capteur est disposé en amont du deuxième poste, pour mesurer la position transversale de la zone des bords de matière à souder destinés à recevoir le faisceau d'électrons, et pour positionner le faisceau sur ladite zone des bords de matière. Cette technique, applicable à la soudure des tubes, présente des inconvénients et n'est pas adaptée pour la soudure précise et fiable de bandes. En effet, elle n'assure aucun contrôle a posteriori de la soudure par faisceau d'électrons, et ne permet pas de corriger les dérives de position du faisceau d'électrons ; elle nécessite de repérer visuellement la position du joint à souder en amont de la soudure ; le repérage du joint est un repérage d'une génératrice, donc un repérage sans butée possible ni référence géométrique fiable ; la solution est une observation de positions relatives de points sur une surface cylindrique à l'aide de capteurs qui ne sont généralement pas précis ni fiables. Le document enseigne en outre d'effectuer une soudure en deux opérations successives, ce qui complique la procédure.

Le document JP-A-57 149 084 enseigne également de repérer visuellement la position du joint en amont de la soudure, complétant le repérage par une seconde mesure en aval de la zone de soudure. Cette technique, concernant également une soudure de tube, présente les mêmes inconvénients que ci-dessus. Nécessitant deux capteurs proches de la zone d'impact des électrons, elle n'est en outre pas adaptée à une soudure sous vide.

La présente invention a notamment pour objet d'assurer simultanément un contrôle a posteriori et permanent de la qualité de soudure et une correction immédiate et permanente des défauts de réglage dans le sens réduisant les défauts de qualité constatés, la correction s'effectuant par des moyens de commande automatiques modifiant la position de l'impact du faisceau d'électrons sur les bandes dans la zone de soudage. La présente invention permet d'optimiser la position d'impact du faisceau d'électrons sur les bandes, pour obtenir en permanence une qualité de soudure optimale.

Selon la présente invention, on effectue la mesure permanente de la position du cordon de soudure, en aval de la soudure, par exemple par un moyen optique, entraînant automatiquement une correction de la position de la source de soudage pour tout décalage détectable. La précision de la détection est telle qu'un décalage détectable n'entraîne aucun défaut de soudage.

L'une des difficultés que vise à résoudre la présente invention est que le soudage s'effectue dans une enceinte à vide, et que, lors du soudage, il se produit des dégagements de vapeurs métalliques susceptibles de perturber le fonctionnement des moyens de détection de position du cordon de soudage. Ainsi, l'accès dans la zone de soudage elle-même est délicat, et l'invention définit des moyens permettant ces détections de position à l'extérieur de l'enceinte à vide.

La présente invention s'appuie sur l'observation selon laquelle une qualité optimale de soudure est obtenue lorsque la portion apparente de cordon de soudure en surface des bandes est disposée selon une position transversale moyenne confondue avec la position transversale qu'occuperait le joint de contact entre les bandes si la soudure n'avait pas eu lieu.

Pour atteindre ces objets ainsi que d'autres, la présente invention définit un procédé pour le contrôle et la commande automatiques du soudage de bandes en continu, dans lequel au moins une première bande et une deuxième bande en défilement continu traversent une enceinte à vide contenant un générateur de faisceau d'électrons de soudage, les bandes étant positionnées côte à côte et maintenues en contact l'une de l'autre selon une surface ou joint de contact lors de leur passage dans l'enceinte ; le faisceau d'électrons est dirigé dans l'enceinte vers une zone d'impact traversée par le joint de contact pour fondre la matière de l'une et l'autre des bandes au voisinage du joint de contact, la matière fondue constituant, après refroidissement, un cordon de soudure réalisant la solidarisation des deux bandes l'une avec l'autre ; selon l'invention, en sortie de l'enceinte à vide, on détermine en continu, dans une zone de détection, la position transversale relative du joint de contact virtuel par rapport au bord extérieur de la première bande, et on mesure en continu dans cette même zone de détection la position transversale relative du cordon de soudure par rapport audit bord extérieur de première bande, pour déterminer par différence l'écart entre lesdites positions relatives ; on entend par "position du joint de contact virtuel" la position transversale qu'occuperait le joint de contact si la soudure n'avait pas eu lieu ; on dévie transversalement le faisceau d'électrons pour déplacer son point d'impact d'une valeur sensiblement égale à l'écart et annuler ainsi cet écart.

Selon un mode de réalisation, adapté notamment aux cas dans lesquels une première bande présente une dimension transversale connue et constante, la mesure des positions respectives et des écarts peut être effectuée de la façon suivante : en sortie de l'enceinte, les bandes sont maintenues transversalement de manière que la première bande à dimension transversale sensiblement constante reste en appui selon son bord opposé au joint de contact contre un galet rotatif à axe vertical fixe ; il en résulte que la position transversale théorique du joint de contact virtuel est alors sensiblement constante ; on repère la position transversale du cordon de soudure par rapport au bâti fixe comprenant l'axe fixe ; on calcule l'écart entre les positions transversales relatives du joint de contact virtuel et du cordon de soudure par différence entre la position transversale repérée du cordon et la position fixe de zone d'appui du galet, diminuée de ladite dimension transversale sensiblement constante de première bande.

Dans les cas où les dimensions transversales de bandes ne sont pas suffisamment constantes, ou sont susceptibles de variations non négligeables, il est nécessaire de prévoir et de corriger l'influence de telles variations de dimension. Selon l'invention, on mesure en amont de l'enceinte à vide la dimension transversale de ladite première bande ; le résultat de mesure est utilisé pour le calcul d'écart entre les positions respectives transversales du cordon de soudure et du joint de contact virtuel.

De préférence, le résultat de mesure de la dimension transversale de bande est stocké pendant une durée d'attente correspondant sensiblement au temps de défilement de bande entre la zone de mesure de largeur de bande et la zone de repérage de position de cordon de soudure ; le résultat de mesure est utilisé ultérieurement, après la durée d'attente, pour le calcul d'écart de positions entre les positions respectives transversales du cordon de soudure et du joint de contact virtuel.

Selon un mode de réalisation avantageux, la mesure des positions respectives et des écarts entre le cordon de soudure et le joint de contact virtuel est effectuée au moyen d'une caméra vidéo dont le champ englobe à la fois le cordon de soudure et le bord de première bande opposé au joint de contact. L'analyse de l'image captée par la caméra permet d'obtenir un signal électrique proportionnel à la distance entre ledit bord de première bande et la position moyenne du cordon de soudure. La comparaison de ce signal avec un signal image de la largeur de première bande fournit l'écart entre le cordon de soudure et le joint de contact virtuel. Ce mode de réalisation a notamment l'avantage de supprimer tout risque d'erreur de mesure de position du cordon de soudure, erreur qui peut résulter par exemple d'un défaut de fixité dans la position de la caméra vidéo ou des moyens de guidage des bandes.

L'invention prévoit des moyens permettant la mise en oeuvre de ce procédé, moyens qui ressortiront de la description suivante de modes de réalisation particuliers, faite en relation avec les figures jointes, parmi lesquelles :

- la figure 1 représente schématiquement une vue de dessus d'une installation de soudage munie d'un dispositif de contrôle et de commande automatiques selon la présente invention ;

- la figure 2 représente schématiquement en vue de côté les principaux organes fonctionnels d'une telle installation de soudage munie d'un dispositif selon l'invention ;

- la figure 3 est une vue schématique de dessus d'une installation de soudage selon la présente invention dans un second mode de réalisation ; et

- la figure 4 est une vue de dessus schématique d'une installation de soudage selon la présente invention dans un troisième mode de réalisation.

Comme le représentent les figures, une installation de soudage selon la présente invention permet le soudage en continu d'une première bande continue 1 et d'une seconde bande continue 2. L'installation comprend une enceinte à vide 3, des moyens pour faire défiler et guider en continu la première bande 1 et la seconde bande 2 à travers l'enceinte, en les maintenant en contact l'une de l'autre selon un joint de contact 4. Un générateur de faisceau d'électrons 5, disposé dans l'enceinte à vide, dirige un faisceau d'électrons 7 vers une zone d'impact 6 traversée par ledit joint de contact 4. Des moyens de commande, comprenant une régulation pilotant une bobine de déflexion, permettent de dévier et d'orienter le faisceau d'électrons 7 en fonction d'un signal électrique de commande de déviation reçu sur une ligne de commande 8.

Un dispositif détecteur de cordon de soudure 9 permet de déterminer la position transversale moyenne du cordon de soudure 10 dans une zone de détection 11 située en aval de l'enceinte à vide 3.

Dans la présente description et dans les revendications qui suivent, on entend par direction transversale une direction sensiblement perpendiculaire au plan dans lequel doit être effectuée la soudure et perpendiculaire au sens de défilement longitudinal 12 des bandes 1 et 2.

Le dispositif détecteur de cordon de soudure 9 fournit, sur son conducteur de sortie 13, un signal électrique de détection image de la position transversale moyenne du cordon de soudure 10 dans la zone de détection 11. Ce signal est envoyé à un ensemble de traitement de signal décrit ci-après, pour produire sur la ligne de commande 8, en fonction du signal électrique de détection, un signal de commande de déviation produisant le déplacement transversal de l'impact 6 du faisceau d'électrons 7 dans le sens réduisant l'écart E entre la position transversale moyenne du cordon de soudure 10 et la position transversale du joint de contact virtuel 40 dans la zone de détection 11.

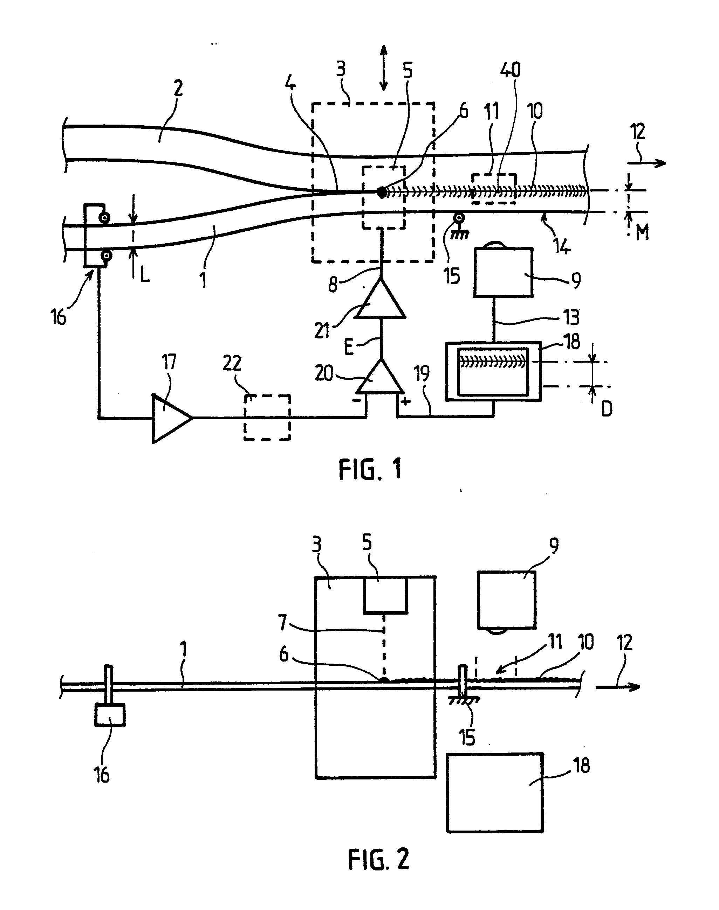

Dans le mode de réalisation représenté sur la figure 1, en sortie de l'enceinte à vide 3, au voisinage de la zone de détection 11, les bandes 1 et 2 sont guidées par des moyens de guidage maintenant la première bande 1 transversalement en appui, selon son bord extérieur 14 ou bord opposé au joint de contact 4, contre un galet 15 rotatif à axe vertical fixe. Le bord extérieur 14 est ainsi maintenu selon une position transversale fixe par rapport au bâti de l'installation et par rapport au dispositif détecteur de position 9. Ainsi, le dispositif détecteur de position de cordon 9 détermine la position transversale moyenne du cordon par rapport au repère fixe contenant l'axe fixe du galet 15. Il est ainsi possible de déterminer par différence la distance M entre la position moyenne du cordon et le bord extérieur 14 de la première bande 1.

En amont de l'enceinte à vide 3, on prévoit un dispositif 16 pour mesurer la dimension transversale L de première bande 1. Le dispositif de mesure 16 fournit un signal électrique de mesure, envoyé à l'ensemble de traitement de signal par l'intermédiaire d'un amplificateur 17.

Dans ce mode de réalisation, le dispositif de détection de position transversale de cordon 9 est une caméra vidéo, fournissant des signaux électriques images de la forme et de la position du cordon de soudure 10 dans la zone de détection 11. L'ensemble de traitement de signal comprend un analyseur d'image 18, recevant les signaux de la caméra vidéo 9, et déterminant la position transversale moyenne du cordon de soudure 10 dans la zone de détection. L'analyseur d'image 18 fournit, sur son conducteur de sortie 19, un signal D image de la distance M entre la position moyenne du cordon de soudure et une position de référence fixe correspondant au bord extérieur 14 de la première bande 1. Ce signal est envoyé à un comparateur 20 qui le compare au signal reçu de l'amplificateur 17 et correspondant à la mesure de largeur L de la première bande 1 en amont de l'enceinte à vide 3. La largeur L définit la position transversale relative du joint de contact virtuel 40 par rapport au bord extérieur 14 de la première bande 1. Le signal de sortie E du comparateur 20, après mise en forme par un circuit 21, est envoyé sur la ligne de commande 8 pour produire le déplacement transversal de la zone d'impact 6 dans le sens réduisant l'écart E entre la largeur de bande L et la distance M déterminée par l'analyseur d'image 18. Pour faciliter le contrôle de l'opérateur, l'analyseur d'image 18 peut être associé à un moniteur vidéo qui reconstitue l'image du cordon de soudure 10.

On remarque que les corrections effectuées par un tel dispositif de commande ne sont applicables que pour les dérives lentes de la source de soudage, ou les variations lentes de largeur L de première bande 1. En effet, le contrôle de position du cordon de soudure s'effectue, dans la zone de détection 11, à une certaine distance de la zone de soudage 6. En pratique, il peut s'écouler entre six à douze secondes entre l'instant de soudage et l'instant de détection d'une zone de soudure, pour une vitesse de défilement de dix mètres par minute. La distance entre la zone de mesure de la largeur L de la première bande 1 et la zone de détection 11 des défauts est encore plus importante. Selon l'invention, on peut corriger l'influence de cette distance en introduisant, dans le circuit électrique de mesure de largeur de bande, un circuit de mémorisation et de temporisation 22 pour stocker le signal de mesure de largeur de bande L pendant une durée correspondant au défilement de la première bande entre la zone de mesure du dispositif 16 et la zone de détection 11.

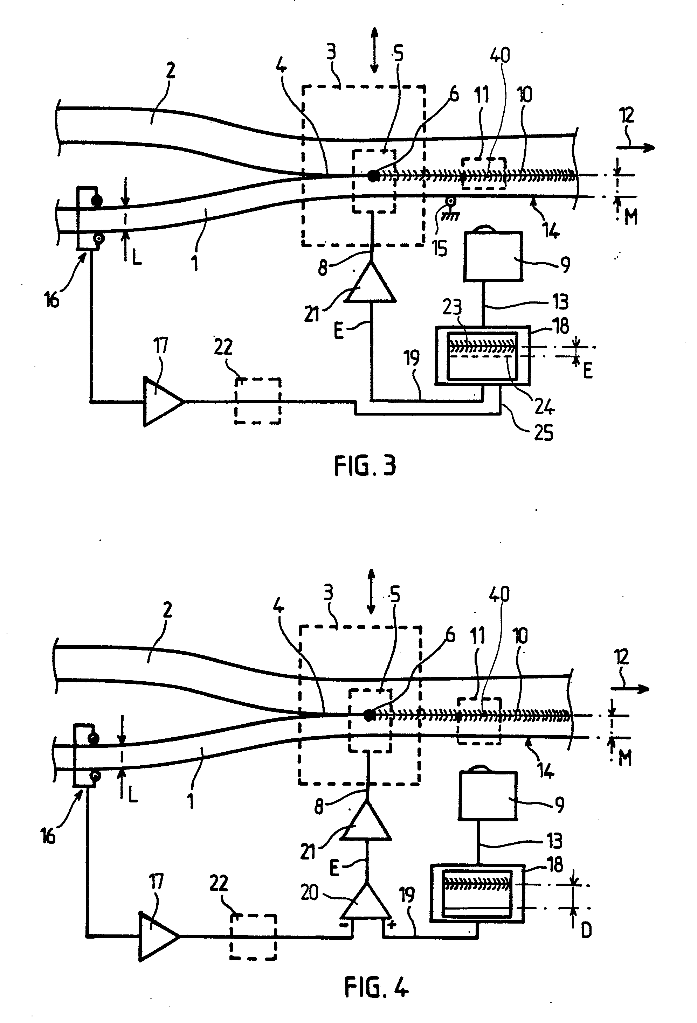

Le mode de réalisation de la figure 3 reprend sensiblement les mêmes éléments fonctionnels que le mode de réalisation de la figure 1, en introduisant toutefois quelques différences dans la constitution et le fonctionnement de l'ensemble de traitement de signal. Dans ce mode de réalisation, la bande 1 est également en appui contre le galet 15 au voisinage de la zone de détection 11, et la caméra vidéo 9 envoie à l'analyseur d'image 18 des signaux images de la forme et de la position du cordon de soudure 10 dans la zone de détection 11. L'analyseur d'image 18, éventuellement associé à un moniteur vidéo, détermine la position moyenne 23 du cordon de soudure par rapport à un repère fixe. L'analyseur d'image 18 est associé en outre à un réticule électronique, ou dispositif qui fournit une image repère 24 en fonction d'un signal électrique présent sur une borne d'entrée de réticule 25. L'analyseur d'image calcule la distance ou écart E entre l'image repère 24 du réticule 25 et l'image de la position moyenne 23 du cordon de soudure, et produit sur son conducteur de sortie 19 un signal électrique proportionnel à cette distance E, signal qui est envoyé au conducteur de commande 8 par l'intermédiaire du circuit de mise en forme 21. La borne d'entrée de réticule 25 reçoit le signal de sortie du dispositif de mesure 16 de largeur L de bande correspondant à la largeur de première bande 1, de sorte que l'image repère 24 reflète la position du joint de contact virtuel 40.

Dans ce mode de réalisation, on peut également insérer un circuit de mémorisation et de temporisation 22 entre le dispositif de mesure de largeur 16 et l'ensemble de traitement de signal, pour tenir compte de la distance séparant le dispositif de mesure de largeur 16 et la zone de détection 11. Comme dans le mode de réalisation précédent, le dispositif agit par déviation et déplacement transversal de position de la zone d'impact 6 du faisceau d'électrons de manière à supprimer l'écart entre l'image 24 du réticule électronique et la ligne moyenne 23 de position du cordon de soudure dans la zone de détection 11.

Lorsque le champ de la caméra 9 permet d'englober à la fois le cordon de soudure 10 et le bord extérieur 14 de la première bande 1 à souder, on peut profiter des possibilités de l'analyseur d'image 18 pour effectuer les comparaisons et les traitements de signaux d'une troisième manière, comme le représente schématiquement la figure 4. Dans ce mode de réalisation, la caméra vidéo 9 fournit simultanément l'image du cordon de soudure 10 et du bord extérieur 14, de sorte que l'analyseur d'image 18 qui lui est associé est capable de déterminer par lui-même la distance M entre les positions transversales respectives du cordon de soudure 10 et du bord extérieur 14 dans la zone de détection 11. L'analyseur d'image produit ainsi, sur son conducteur de sortie 19, un signal D image de cette distance M. Ce signal est envoyé au comparateur 20 qui le compare au signal résultant de la mesure de largeur L de première bande 1 par le dispositif de mesure 16. Les moyens de commande de déviation transversale du faisceau d'électrons produisent le déplacement transversal de la zone d'impact 6 de façon à réduire et annuler l'écart E entre la largeur L mesurée par le dispositif de mesure 16 et la distance M déterminée par les moyens de traitement de signal. Un dispositif de mémorisation et de temporisation 22 peut également être inséré entre le dispositif de mesure 16 et le comparateur 20.

Pour la mise en oeuvre de l'invention, on peut utiliser des moyens de déviation du faisceau d'électrons et des moyens de caméra vidéo 9 et de réticule électronique 24 qui sont bien connus et à la disposition de l'homme du métier, de sorte qu'il n'est pas utile de les décrire dans le présent exposé. L'analyseur d'image 18 peut être d'un type connu permettant d'analyser l'image d'un cordon. Un tel analyseur est par exemple diffusé dans le commerce par la société française ITMI.

La présente invention n'est pas limitée aux modes de réalisation qui ont été explicitement décrits, mais elle en inclut les diverses variantes et généralisations contenues dans le domaine des revendications ci-après.

## Revendications

1 - Procédé pour le contrôle et la commande automatiques du soudage en continu de deux bords de pièces allongées, dans lequel un premier bord de pièce allongée (1) et un deuxième bord de pièce allongée (2) en défilement continu traversent une enceinte à vide (3) contenant un générateur (5) de faisceau d'électrons de soudage, les bords de pièces allongées (1, 2) étant positionnés côte à côte et guidés pour être maintenus en contact l'un de l'autre selon un joint de contact (4) lors de leur passage dans l'enceinte à vide (3), le faisceau d'électrons (7) étant dirigé dans l'enceinte à vide (3) en une zone d'impact (6) traversée par le joint de contact (4) pour fondre la matière de l'un et l'autre des bords de pièces allongées (1, 2) au voisinage du joint de contact (4), la matière fondue constituant, après refroidissement, un cordon de soudure (10) réalisant la solidarisation des deux bords de pièces allongées l'un avec l'autre, le faisceau d'électrons étant dévié transversalement pour déplacer son point d'impact (6) en fonction des signaux produits par un dispositif de mesure (15) de position de pièce (1),
caractérisé en ce que :
- pour le contrôle et la commande automatiques du soudage bord à bord de bandes (1, 2) en continu,
- en sortie de l'enceinte à vide (3), on détermine en continu dans une zone de détection (11) la position transversale relative du joint de contact virtuel (40) par rapport au bord extérieur (14) de la première bande (1),
- en sortie de l'enceinte à vide (3), on mesure en continu, dans ladite zone de détection (11), la position transversale relative du cordon de soudure (10) par rapport audit bord extérieur (14),
- par différence, on détermine l'écart (E) entre lesdites positions transversales relatives,
- on dévie transversalement le faisceau d'électrons (7) pour déplacer son point d'impact (6) d'une valeur sensiblement égale audit écart (E) et annuler ainsi cet écart.

2 - Procédé selon la revendication 1, dans lequel la première bande (1) présente une dimension transversale (L) connue, caractérisé en ce que :
- en sortie de l'enceinte à vide (3), les bandes sont maintenues transversalement de manière que la première bande (1) reste en appui selon son bord extérieur (14) opposé au joint de contact (4) contre un galet (15) rotatif à axe vertical fixe, de sorte que la position transversale du joint de contact virtuel (40) est déterminée,
- on repère la position transversale du cordon de soudure (10) par rapport au bâti comprenant l'axe fixe du galet (15),
- on en déduit l'écart (E) entre les positions transversales relatives du joint de contact virtuel (40) et du cordon de soudure (10) par différence entre d'une part la distance (M) de la position transversale du cordon de soudure (10) repérée par rapport à la position fixe de zone d'appui (14) du galet (15), et entre d'autre part ladite dimension transversale (L) connue de première bande.

3 - Procédé selon la revendication 1, caractérisé en ce que :
- en sortie de l'enceinte à vide (3), on mesure directement la distance transversale entre la position moyenne du cordon de soudure (10) et le bord extérieur (14) de bande opposé au joint de contact (4),

- on compare le résultat de cette mesure à la largeur (L) de première bande (1), pour en déduire l'écart (E).

4 - Procédé selon l'une des revendications 2 ou 3, caractérisé en ce que :
- en amont de l'enceinte à vide (3), on mesure la dimension transversale (L) de ladite première bande (1),
- le résultat de mesure est utilisé pour le calcul d'écart (E) entre les positions respectives transversales du cordon de soudure (10) et du joint de contact virtuel (40).

5 - Procédé selon la revendication 4, caractérisé en ce que le résultat de mesure (L) de la dimension transversale de première bande (1) est stocké pendant une durée d'attente correspondant sensiblement au temps de défilement de bande entre la zone de mesure (16) de largeur et la zone de détection (11), puis, à l'issue de ladite durée d'attente, ce résultat est utilisé pour le calcul d'écart.

6 - Dispositif pour le contrôle et la commande automatiques du soudage en continu de bords de pièces allongées dans une installation de soudage par faisceau d'électrons sous vide, l'installation comprenant une enceinte à vide (3), des moyens pour faire défiler et guider en continu lesdits bords de pièces allongées (1, 2) à travers l'enceinte à vide (3) en les maintenant en contact l'un de l'autre selon un joint de contact (4), un générateur (5) de faisceau d'électrons dirigeant au moins un faisceau d'électrons (7) dans l'enceinte à vide (3) vers une zone d'impact (6) traversée par ledit joint de contact (4), des moyens pour dévier et orienter le faisceau d'électrons en fonction d'un signal électrique de commande de déviation (8) produit par un dispositif de mesure (15) de position de pièce (1), caractérisé en ce qu'il comprend :
- un dispositif (15, 16, 9) pour déterminer en continu dans une zone de détection (11) la position transversale relative du joint de contact virtuel (40) par rapport au bord extérieur (14) de première pièce allongée en forme de bande (1), et pour fournir un signal électrique fonction de cette position,
- un dispositif (9) détecteur de position transversale de cordon de soudure (10), disposé en aval de l'enceinte à vide (3), permettant de mesurer la position transversale relative moyenne du cordon de soudure (10) par rapport au bord extérieur (14) de la première pièce allongée en forme de bande (1) dans ladite zone de détection (11), et fournissant un signal électrique de détection image de cette position transversale relative,
- un dispositif de traitement de signal (18, 20, 21) pour produire, en fonction desdits signaux électriques, un signal de commande (8) de déviation du faisceau d'électrons (7) produisant le déplacement transversal de la zone d'impact (6) du faisceau d'électrons (7) dans le sens réduisant l'écart (E) entre la position transversale moyenne du cordon de soudure (10) et la position transversale du joint de contact virtuel (40) dans la zone de détection (11).

7 - Dispositif selon la revendication 6, caractérisé en ce que:
- en sortie de l'enceinte à vide (3), les bandes (1, 2) sont guidées par des moyens de guidage maintenant la première bande (1) transversalement en appui selon son bord extérieur (14) opposé au joint de contact (4) contre un galet rotatif (15) à axe vertical fixe,
- le dispositif (9, 18) détecteur de cordon de soudure détermine la position transversale moyenne du cordon de soudure (10) par rapport au repère fixe contenant l'axe fixe du galet (15).

8 - Dispositif selon la revendication 7, caractérisé en ce qu'il comprend en outre un dispositif (16) pour mesurer la dimension transversale (L) de première bande (1) en amont de l'enceinte à vide (3), ledit dispositif fournissant un signal électrique de mesure envoyé au dispositif de traitement de signal (9, 18, 20, 21), signal de mesure que le dispositif de traitement de signal compare au signal (D) image de la distance (M) entre la position moyenne du cordon de soudure (10) et le bord extérieur (14) fixe de première bande (1) en sortie de l'enceinte à vide (3), pour déterminer le signal de commande (8) de déviation.

9 - Dispositif selon la revendication 8, caractérisé en ce qu'il comprend des moyens (22) de stockage et de temporisation pour stocker le signal de mesure de largeur (L) de bande fourni par le dispositif de mesure (16) pendant une durée d'attente correspondant sensiblement au temps de défilement de bande entre la zone de mesure (16) de largeur et la zone de détection (11).

10 - Dispositif selon l'une quelconque des revendications 6 à 9, caractérisé en ce que le dispositif détecteur de cordon de soudure (9) est une caméra vidéo associée à un analyseur d'image (18), le champ de la caméra (9) englobant à la fois le cordon de soudure (10) et le bord (14) de première bande (1), l'analyseur d'image (18) produisant un signal électrique image de la distance transversale (M) entre le bord extérieur (14) de bande et la position moyenne du cordon (10).

11 - Dispositif selon l'une quelconque des revendications 6 à 10, caractérisé en ce que le dispositif détecteur de cordon de soudure (9) est une caméra vidéo fixe associée à au moins un réticule électronique (24) réglable en position transversale, et associée à un analyseur d'image (18) comparant la position moyenne (23) du cordon de soudure (10) à la position du réticule électronique (24) et déduisant de cette comparaison l'écart (E) entre le cordon de soudure (10) et le joint de contact virtuel (40) dans la zone de détection (11), l'analyseur d'image étant éventuellement associé à un moniteur vidéo visualisant le cordon de soudure et le réticule.

12 - Dispositif selon la revendication 11, caractérisé en ce que le réticule électronique (24) est commandé par le signal de mesure de dimension transversale (L) de première bande fourni par le dispositif de mesure (16), de sorte que le réticule (24) matérialise et suit les variations de la position du joint de contact virtuel (40).

FIG. 1

FIG. 2

FIG. 3

FIG. 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| D,A | US-A-3585351 (HINRICHS)<br>* colonne 2, ligne 49 - colonne 6, ligne 36; figures 1-6 *<br>--- | 1, 6 | B23K15/00 |
| D,A | FR-A-2360373 (TECHMETA)<br>* page 1, ligne 1 - page 2, ligne 13; figure 1 *<br>--- | 1, 6 | |
| D,A | PATENT ABSTRACTS OF JAPAN<br>vol. 6, no. 253 (M-178)(1131) 11 décembre 1982,<br>& JP-A-57 149084 (FURUKAWA DENKI KOGYO) 14 septembre 1982,<br>* le document en entier *<br>----- | 1, 6, 10 | |
| | | | **DOMAINES TECHNIQUES RECHERCHES (Int. Cl.5 )**<br><br>B23K<br>B23Q |

Le présent rapport a été établi pour toutes les revendications

| Lieu de la recherche | Date d'achèvement de la recherche | Examinateur |
|---|---|---|
| LA HAYE | 20 DECEMBRE 1989 | HERBRETEAU D. |